# EUROPEAN PATENT APPLICATION

(11) **EP 3 623 258 A1**
(43) Date of publication of application: **18.03.2020**
(21) Application number: 18194254.1
(22) Date of filing: 13.09.2018
(51) Int. Cl.: B61L 27/00, B61L 25/02, H02J 3/24

(54) **METHOD OF MONITORING A POWER GRID OF AN ELECTRIC RAILWAY SYSTEM**

(71) Applicant: ABB Schweiz AG, 5400 Baden (CH)
(72) Inventor: Eisele, Andreas, 79787 Lauchringen (DE); Stemmler, Christoph, 5415 Nussbaumen (CH); Cortinovis, Andrea, 5430 Wettingen (CH); Stump, Daniel, 9216 Hohentannen (CH)
(74) Representative: Qip Patentanwälte Dr. Kuehn & Partner mbB

(57) **Abstract**

A method of monitoring a power grid (10) of an electric railway system, wherein the electric railway system comprises a plurality of electric rail vehicles (14), wherein the method comprises the following steps: collecting electric vehicle data (48) acquired by electric rail vehicles (14), wherein the electric vehicle data (48) is based on measurements in the electric rail vehicle (14) and comprises at least one property of the power grid (10) at the location of the electric rail vehicle (14), in particular a voltage of the power grid (10) and/or a frequency of the power grid (10) and/or an active and/or reactive power of the electric rail vehicle (14); determining a location of the electric rail vehicles (14) in the power grid (10); localizing the electric vehicle data (48) such that the electric vehicle data (48) is associated with locations, where the electric vehicle data (48) has been acquired; and determining at least one section (11, 12) of the power grid (10) where the at least one property of the power grid (10) deviates from a given power grid standard property more than a given threshold.

## Description

### FIELD OF THE INVENTION

The invention relates to the field of a method of monitoring a power grid of an electric railway system. Furthermore, the invention relates to a monitoring system for monitoring a power grid of an electric railway system.

### BACKGROUND OF THE INVENTION

Usually, the power grid of an electric railway system is monitored via data from power stations and data from static points of the power grid, e.g., transformer stations. Furthermore, power flow management in the power grid of an electric railway system is based on the centralized information of all connected decentralized substations feeding the network (e.g., Supervisory Control and Data Acquisition, SCADA). These substations deliver continuous measurements of the voltage of the power grid, the frequency of the power grid and the active and reactive power (power factor cos cp) at the respective static points of the power grid, where the substation is located.

The loads of the rolling stock, i.e., the electric rail vehicles (trains etc.), are only considered in the static planning based on planned time tables of the rolling stock.

### DESCRIPTION OF THE INVENTION

It is an objective to improve the monitoring of a power grid of an electric railway system.

This objective is achieved by the subject-matter of the independent claims. Further exemplary embodiments are evident from the dependent claims and the following description.

Aspects of the invention relate to a method of monitoring a power grid of an electric railway system and a monitoring system for monitoring a power grid of an electric railway system.

According to a first aspect of the invention, a method of monitoring a power grid of an electric railway system is proposed, wherein the electric railway system comprises a plurality of electric rail vehicles, wherein the method comprises the following steps: collecting electric vehicle data acquired by electric rail vehicles, wherein the electric vehicle data is based on measurements in the electric rail vehicle and comprises at least one property of the power grid at the location of the electric rail vehicle, in particular a voltage of the power grid and/or a frequency of the power grid and/or an active and/or reactive power of the electric rail vehicle; determining a location of the electric rail vehicles in the power grid; localizing the electric vehicle data such that the electric vehicle data is associated with locations, where the electric vehicle data has been acquired; and determining at least one section of the power grid where the at least one property of the power grid deviates from a given power grid standard property more than a given threshold.

One advantage hereof is that the power grid can be monitored in detail. In particular, data from the electric rail vehicles which move through the power grid and measure electric properties of the electric rail vehicles and/or of the power grid at different times and at different positions in the power grid is collected. Thus, large sections of the power grid can be monitored as the electric rail vehicles move through the power grid. Thus, problematic sections of the power grid, i.e., sections of the power grid where the power grid property or power grid properties is/are not within an allowed deviation range around a standard power grid property, can be identified with this method easily. Furthermore, information about the electric rail vehicle itself, e.g., how much power the electric rail vehicle consumes and/or how high the load current of the electric rail vehicle is, which is not available in known monitoring systems, can be used for monitoring the power grid.

An electric rail vehicle can be a train, a tram and/or a metro, for example. The power grid can be connected to the electric rail vehicle via a third rail/power rail and/or via a power line.

The property of the power grid can be the voltage of the power grid determined/measured in the electric rail vehicle at the position of the electric rail vehicles, i.e., the voltage of the power grid at the position of the respective electric rail vehicle, and/or an impedance of the power grid determined/measured in the respective electric rail vehicle, i.e., the impedance of the power grid at the position of the electric rail vehicle, and/or the frequency of the power grid, i.e., the frequency of the voltage of the power grid at the position of the respective electric rail vehicle.

The electric vehicle data is based on measurements in the electric rail vehicle. For example, the root mean square line voltage, the line frequency and the active and the reactive power of the power grid can be calculated in the electric rail vehicle based on the measured voltage of the power grid at the pantograph of the electric rail vehicle and the measured total load current of the electric rail vehicle. The calculated root-mean-square line voltage, the line frequency and the active and the reactive line power can be part of the electric vehicle data which is transferred from the electric rail vehicle to the external computing/analysing/evaluation system.

The electric vehicle data can be sent by the electric rail vehicle to an external computing system which stores the data in a database. The transfer/sending of the electric vehicle data can be done via mobile radio/mobile phones and/or via the Internet and/or via data lines of the electric railway system (e.g., automatic train control data lines). This way the electric vehicle data is collected/acquired by the monitoring system.

The localizing of the electric vehicle data can be carried out in the electric rail vehicle. The electric rail vehicle can stamp each measurement with a time date and/or a position data and the electric vehicle data can be sent with the corresponding times and/or positions to the external computing system.

The time and the position can be acquired from a GPS device of the electric rail vehicle.

The localizing of the electric rail vehicle can also be carried out by the external computing system based on the time stamp and the timetable of the respective electric rail vehicle.

Based on the localized electric rail vehicle data, sections of the power grid can be determined where the property/properties of the power grid is/are not within a threshold around a standard power grid property. The determined sections can be flagged or added to a list together with the determined/calculated difference. The number of determined sections can be calculated. Also, if the determined power grid property differs from the standard value more than the threshold in more than one section, the section where the absolute difference is the largest can be identified.

Thus, a detailed monitoring of the power grid and/or of different sections of the power grid is possible.

It has to be noted that the determining of property/properties of the power grid can be carried out with a computing system which uses software which is adapted for machine learning and that was trained with known electric vehicle data and known properties of the power grid and/or of sections of the power grid. It is not necessary that the quantities relating to the property/properties of the power grid is/are determined directly.

The given power grid standard property can be set value of the voltage, frequency and/or current. The given power grid standard property can be different for different sections of the power grid. The power grid standard property can be a value which is set.

Also, the threshold can be the same or different for different sections of the power grid. The threshold can be a set value or can depend on several properties. The threshold can depend on the number of electric rail vehicles in a particular section of the power grid and/or the sum of the (currently used) power of the electric rail vehicles in a particular section of the power grid. The threshold can depend on the power grid properties of sections of the power grid. Furthermore, the threshold of a specific section can depend on the average difference between the standard power grid property/properties and the determined power grid property of sections of the power grid. I.e., the threshold is higher for a section when many sections differ substantially from the standard properties/standard values and the threshold is lower when many sections do not differ substantially from the standard properties/standard values.

According to a second aspect of the invention, a monitoring system for monitoring a power grid of an electric railway system is proposed, wherein the monitoring system comprises: electric vehicle data acquiring devices for acquiring electric vehicle data, wherein the electric vehicle data is based on measurements in the electric rail vehicle and comprises at least one property of the power grid at the location of the electric rail vehicle, in particular a voltage of the power grid and/or a frequency of the power grid and/or an active and/or reactive power of the electric rail vehicle; a central database for storing electric vehicle data and/or static points power grid data comprising a property of the power grid at respective static points in the power grid, and a determining system for performing the method as described above .

One advantage hereof is that the power grid can be monitored in detail. In particular, data from the electric rail vehicles which move through the power grid and measure electric properties of the electric rail vehicles and/or of the power grid at different times and at different positions in the power grid can be collected. Thus, large sections of the power grid can be monitored as the electric rail vehicles move through the power grid. Thus, problematic sections of the power grid, i.e., sections of the power grid where the power grid property or power grid properties is/are not within an allowed deviation range around a standard power grid property, can be identified easily. Furthermore, information about the electric rail vehicle itself, e.g., how much power the electric rail vehicle consumes and/or how high the load current of the electric rail vehicle is, which is not available in known monitoring systems, can be used for monitoring the power grid.

According to an embodiment of the method, the method further comprises: generating a power grid map comprising a power flow, a voltage and/or a frequency of the power grid at different locations of the power grid from the localized electric vehicle data. A detailed map of the power grid properties can be generated based on the measurements of the electric rail vehicles. The map can be but does not have to be graphic representation of the power grid. Also, the map can be a mathematical representation of the power grid. The map typically comprises properties of different sections of the power grid. The map can be a data set comprising the power grid properties at different locations of the power grid and/or of different sections of the power grid. The determined map comprises one or more power grid properties at different locations and/or sections of the power grid. In addition, the map can comprise information about the properties of the electric rail vehicle, e.g., how much power the electric rail vehicle consumes, how much the electric rail vehicle would like to consume, but there is not enough power present in the power grid at the location of the electric rail vehicle (so-called power limitation), how much power the electric rail vehicle recuperates (active and/or reactive power), i.e., how much power the electric rail vehicle gives back in the power grid etc. The map comprises a representation of the power grid. The map can be represented graphically, by a visual map of the power grid where at each location of the electric rail vehicles the respective power grid properties and/or the respective electric properties of the electric rail vehicles are shown. Also, the power grid can consist of several sections. The sections can be but do not have to be electrically separated from each other. The property and/or the properties of each subsection can be contained in the map and/or shown in a graphic representation of the map. With this power grid map, problems and/or deviations from the given power grid standard property can be identified easily.

According to an embodiment of the method, static points power grid data is collected, wherein the static points power grid data comprises a property of the power grid at respective static points in the power grid, and wherein the section of the power grid where the at least one property of the power grid deviates from the given power grid standard property more than the given threshold is determined from the localized electric vehicle data and the static points power grid data. One advantage hereof is that the power grid can be monitored with a very high precision, since information from moving locations (electric rail vehicles) and fixed/static locations is used. In particular, the section where the at least one property of the power grid deviates from the given power grid standard property more than the given threshold can be determined with a very high precision.

According to an embodiment of the method, a power flow in the power grid is controlled based on the determined section of the power grid such that the difference between a power grid standard property and a power grid property in the section is reduced. One advantage hereof is that the controlling can be based on the information from the electric rail vehicles. Thus, the controlling can be based on the actual movement of the electric rail vehicles and the actual power consumption of the electric rail vehicles in sections of the power grid and not only based on the planned movement of the electric rail vehicles and/or the planned power consumption of the electric rail vehicles. This avoid any undesired power limitations of the electric rail vehicles due to the feeding situation, i.e., due to the power provided by the power grid. Hence, the stability of the power grid can be improved technically easily. In this way, it can be ensured that the voltage of the power grid at the position of the electric rail vehicles and/or the impedance of the power grid and/or the power of the power grid and/or the frequency of the power grid at the position of the electric rail vehicles can be adjusted/controlled to be within a threshold around a standard property of the power grid. I.e., if the voltage of the power grid is lower than the standard voltage in a section of the power grid, the voltage in this section of the power grid can be increased. I.e., if the voltage of the power grid is higher than the standard voltage in a section of the power grid, the voltage in this section of the power grid can be decreased. E.g., if the frequency is too low, the frequency can be increased. E.g., if the frequency is too high, the frequency can be decreased. This way, any undesired power limitations of the electric rail vehicle due to the feeding situation, i.e., due to the voltage/current/frequency provided by the power grid at the position of the electric rail vehicle, are avoided reliably.

According to an embodiment of the method, a section of the power grid where additional power needs to be input in the power grid is determined based on the determined section of the power grid where the at least one property of the power grid deviates from a given power grid standard property more than a given threshold. One advantage of this is that the additional power plants/power sources can be activated to provide more power to the determined section(s) of the power grid. This way, any undesired power limitations of the electric rail vehicle due to the feeding situation, i.e., due to the voltage/current/frequency provided by the power grid at the position of the electric rail vehicle, are avoided with a very high reliability.

According to an embodiment of the method, the electric vehicle data comprises active power and reactive power of the electric rail vehicle. One advantage hereof is that the power grid and/or sections of the power grid can be monitored with a very high reliability. Furthermore, the power flow in the power grid can be controlled very effectively.

According to an embodiment of the method, timetables of the electric rail vehicles are considered when determining a section of the power grid where the at least one power grid property deviates from a given power grid standard property more than the given threshold. In this way, deviations of the power grid properties/characteristics from the standard power grid properties/characteristics which are due to the schedule of movement of the electric rail vehicles, since for example several trains accelerate at the same time and/or recuperate power back into the grid at the same time and/or at the same sections of the grid, can be considered or be neglected or be ignored. E.g., when several electric rail vehicles start at the full hour from train stations, the voltage can change regularly from the standard voltage more than the given threshold for several dozens of seconds due to the simultaneous acceleration of the electric rail vehicles.

According to an embodiment of the method, the section of the power grid where the at least one property of the power grid deviates from a given power grid standard property more than a given threshold is determined in real time. In this way, the characteristics/properties of the power grid or the different sections of the power grid can be monitored in real time. This way, the controlling can be done in real time, too. This leads to a more efficient controlling of the power/power flow in the power grid and/or to a higher stability of the power grid.

According to an embodiment of the method, the electric rail vehicle does not recuperate power in the power grid when it is determined that the electric rail vehicle is in a section of the power grid where the at least one power grid property deviates from the given power grid standard property more than the given threshold. One advantage hereof is that recuperation of power from the electric rail vehicle in the power grid can be avoided if it is determined that the power grid is already unstable in the section of the power grid where the electric rail vehicle is located. Thus, the stability of the power grid is improved by this. It is also possible, that the electric rail vehicle only recuperates a part (e.g., 50%) of the power the electric vehicle would like to recuperate in the power grid when it is determined that the electric rail vehicle is in a section of the power grid where the at least one power grid property deviates from the given power grid standard property more than the given threshold.

According to an embodiment of the method, the electric vehicle data comprises occurrences of power limitation of the electric rail vehicles and/or of limitation of recuperation of power from the electric rail vehicles in the power grid. By this, sections of the power grid where not enough power is provided (so-called power limitation, which is normally detected by a dropping voltage of the power grid), i.e., the electric rail vehicle would like to consume more power but not enough power is present at the location in the power grid, can be determined. Also, sections of the power grid, where the power grid cannot receive all recuperation power from the electric rail vehicle (so-called limitation of recuperation), i.e., where the electric rail vehicle would like to recuperate/give back power in the power grid but the power grid is not able to receive all power at the location in the power grid, can be determined. The power/power flow in the power grid can be adjusted/controlled accordingly, to reduce the number of occurrences of power limitation and/or limitation of recuperation.

Further aspects of the invention relate to a computer program, which, when executed on at least one processor, is adapted for performing the method as described in the above and in the following, and to a computer-readable medium, in which such a computer program is stored.

A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer readable medium may also be a data communication network, e.g. the Internet, which allows downloading a program code. In general, the computer-readable medium may be a non-transitory or transitory medium.

It has to be understood that features of the method as described in the above and in the following may be features of the computer program, the computer-readable medium and the monitoring system as described in the above and in the following, and vice versa.

According to an embodiment of the monitoring system, the monitoring system further comprises a power flow controller device for controlling a power flow in the power grid based on the determined section of the power grid such that the difference between a power grid standard property and a power grid property in the section is reduced. One advantage hereof is that the controlling can be based on the information from the electric rail vehicles. Thus, the controlling can be based on the actual movement of the electric rail vehicles and the actual power consumption of the electric rail vehicles in sections of the power grid and not only based on the planned movement of the electric rail vehicles and/or the planned power consumption of the electric rail vehicles. This avoid any undesired power limitations of the electric rail vehicles due to the feeding situation, i.e., due to the power provided by the power grid. Hence, the stability of the power grid can be improved technically easily.

According to an embodiment of the monitoring system, the electric vehicle data comprises active power and reactive power of the electric rail vehicles measured in the electric rail vehicles. One advantage hereof is that the power grid and/or sections of the power grid can be monitored with a very high reliability. Furthermore, the power flow in the power grid can be controlled very effectively.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 shows schematically a power grid of an electric railway system to be monitored with a monitoring system according to an embodiment of the invention.
Fig. 2 shows schematically a railway monitoring system according to an embodiment of the invention.
Fig. 3 shows a flow diagram for a method for monitoring a power grid of an electric railway system according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

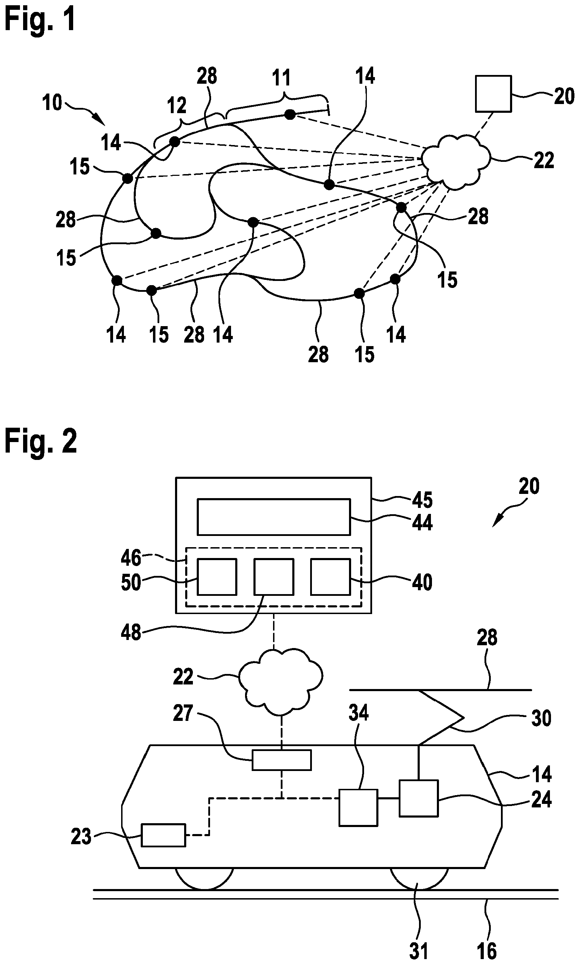

Fig. 1 shows schematically a power grid 10 to be monitored with a monitoring system 20 according to an embodiment of the invention. The power grid 10 provides power/electricity to a plurality of electric rail vehicles 14 which run in the railway system. The power grid 10 comprises a plurality of power lines 28 which run parallel to the railways. The power grid 10 can be divided in sections 11, 12 which are electrically separated from each other. Thus, the characteristics/properties of the different sections 11, 12 of the power grid 10 can be different.

Every electric rail vehicle 14 may comprise at least one traction vehicle. The electric rail vehicle 14 (also called electric railway vehicle) can be a train or other railborne/railbound vehicle, e.g., a metro or a tram. The electric rail vehicle rides on rails 16.

Fig. 1 furthermore shows a power grid monitoring system 20, which is connected via a communication network, such as the Internet and/or mobile radio/mobile phone network, with each electric rail vehicle 14 and with static points 15 at different points across the power grid 10 where properties of the power grid 10 at their respective location are measured.

Fig. 2 schematically shows a monitoring system 20 for monitoring a power grid 10 of an electric railway system according to an embodiment of the invention. Fig. 2 shows one of the electric railway vehicles and the monitoring system 20 in greater detail. The electric railway vehicle comprises a pantograph 30 which is contact with an overhead power line 28 of the power grid 10. The pantograph 30 provides power to the electric rail vehicle 14. The power line 28 can also be a power rail which is normally used in a metro system.

The electric rail vehicle 14 comprises a traction converter which supplies current to an electrical motor of the electric rail vehicle 14. The traction converter converts the power from the power grid 10. The electrical motor drives a traction wheel 31 of the electric rail vehicle 14. It may be that the electric railway vehicle has additional wheels and/or multiple traction motors. The traction converter is controlled by a controller 34, which upon commands from a vehicle control and monitoring system 24 determines a frequency and a power of an actual current to be supplied to the electrical motor. The vehicle control and monitoring system 24 and the controller 34 are interconnected with a remote communication unit 27, which sends electric vehicle data 48, which is acquired from the system of the electric rail vehicle 14, data of the controller 34 and of optional further components via the communication network to a central part of the monitoring system 20. The collected data is then saved in a database 46, e.g., in a cloud 22.

The controller 34 continuously or in set intervals measures the voltage of the power line 28 at the pantograph 30 and/or the total load current of the electric rail vehicle 14. Based on these measurements, the controller 34 calculates the root-mean-square (rms) voltage of the power grid 10 at the position of the electric rail vehicle 14, the frequency of the power grid 10 at the position of the electric rail vehicle 14 and the active and reactive power (power factor cos ϕ) of the power grid 10 at the position of the electric rail vehicle 14. These calculated values can be part of the electric vehicle data 48.

In particular, the electric rail vehicle 14 comprises measuring devices for determining/measuring different characteristics/properties of the electric rail vehicle 14 and/or of the power grid 10 at the location of the electric rail vehicle 14. The electric vehicle data 48 can comprise one or more of the following:
- the power consumption of the electric rail vehicle 14, i.e., how much power the electric rail vehicle consumes and/or wants to consume assuming that the power grid 10 cannot provide as much as power as the electric rail vehicle needs/wants to consume;
- the power recuperation of the electric rail vehicle 14, i.e., how much power the electric rail vehicle 14 recuperates and sends back in the power grid 10;
- a property/characteristic of the power grid 10 measured in the electric rail vehicle 14, in particular this can be the voltage of the power grid 10 measured in the electric rail vehicle 14, i.e., the voltage of the power grid 10 at the position of the electric rail vehicle 14, and/or an impedance of the power grid 10 measured in the electric rail vehicle 14, i.e., the impedance of the power grid 10 at the position of the electric rail vehicle 14, and/or the frequency of the power grid 10, i.e., the frequency of the voltage of the power grid 10 at the position of the electric rail vehicle 14.

It has to be noted that the term "of the power grid" can mean "of a section 11, 12 of the power grid", when the power grid 10 comprises more than one section 11, 12. In principle, it is possible that the power grid 10 has only one section 11, 12.

Further properties/characteristics of the power grid 10 can be measured in the electric rail vehicle 14.

The electric railway vehicle further comprises a GPS device 23 for determining the position of the electric rail vehicle 14 and/or the time when acquiring/measuring the electric vehicle data 48.

All of the measured electric vehicle data 48 is saved/generated with a corresponding time and/or position 40 of the electric rail vehicle 14. I.e., not only the electric vehicle data 48 itself is generated but the time and/or position 40 of the electric rail vehicle 14 when the data was measured is generated/saved. This way the electric vehicle data 48 can be assigned to a specific time and/or point of the power grid 10.

The electric vehicle data 48 is sent via mobile radio and/or via the internet to a cloud 22 where the data is saved. The electric vehicle data 48 is sent together with the corresponding times and/or positions 40 of the electric rail vehicle 14. The time of the measurement of the electric vehicle data 48 can be acquired from the GPS device 23 of the electric rail vehicle 14. Alternatively or additionally, the time can be acquired from a time device in the electric rail vehicle 14. The time can be used together with timetables to determine the position of the electric rail vehicle 14. This can be also used to verify the position of received/collected electric vehicle data 48.

The position of the electric rail vehicle 14 can be acquired from the GPS device 23 of the electric rail vehicle 14.

Furthermore, there are several static points 15 at different points across the power grid 10 where properties of the power grid 10 at their respective location are measured. The static points 15 are at fixed positions, respectively. In contrast to the electric rail vehicle 14 which measures properties of the power grid 10 at different positions as static points power grid data 50 across the grid over time, at the static points 15 the power grid 10 characteristic(s)/properties at fixed points of the power grid 10 is/are measured.

The static points power grid data 50 is sent from the static points 15 to the cloud 22 and, thus, to the external computing system 45. Then it is saved in the database 46. The position of the static points 15 can be sent together with the static points power grid data 50 to the cloud 22 or the respective positions are already known from a database 46. The times of the measurement of the data at the static points 15 can be sent together with the data to the cloud 22. The static points 15 can be power plants which generate power for the power grid 10 and/or transformers which transform voltage.

The electric vehicle data 48 can be pushed from the electric rail vehicle 14 to the cloud 22 as soon as a connection between the electric vehicle data 48 and the cloud 22 has been established.

The data is saved in a database 46 in the cloud 22. The database 46 comprises the electric vehicle data 48, the static points power grid data 50 and the times, at which the data has been measured at the static points 15, and/or the times and/or the locations where the electric vehicle data 48 has been generated/measured.

From the cloud 22 the data is sent to an external computing system 45. The computing system 45 is not inside the electric rail vehicle 14.

The monitoring system 20 comprises electric vehicle data acquiring devices which acquire the electric vehicle data 48 from the database 46 and/or the cloud 22. It is also possible that the data is directly acquired from the electric rail vehicle 14 as soon as the data is available. The external computing system 45 can be a part of the monitoring system 20.

The external computing system 45 runs a software which analyzes the data, i.e., the electric vehicle data 48 and the static points power grid data 50 together with the positions and/or times when the respective data was acquired. The analyzing can be performed to determine power grid properties/characteristics, i.e., the status/properties of the power grid 10 or different sections 11, 12 of the power grid 10. In particular, the stability of the power grid 10 at different locations can be determined. Furthermore, the determined power grid characteristics can be compared with power grid standard characteristics/properties.

In particular, at least one of the voltage, the frequency, the impedance, the active power and reactive power of the power grid 10 at different locations and/or sections 11, 12 of the power grid 10 are compared with standard values/properties, i.e., power grid standard characteristics. The comparison can be a multi-dimensional comparison. The difference or the absolute value of the difference is compared with a threshold value or several threshold values.

The threshold value can be a given value or can depend on several properties. The threshold can be different for different sections 11, 12 of the power grid 10. Furthermore, the threshold or thresholds can depend on the number of electric rail vehicles 14 in a particular section 11, 12 of the power grid 10 and/or the sum of the (currently used) power of the electric rail vehicles 14 in a particular section 11, 12 of the power grid 10. The threshold value can be a percentage of the standard power grid property/value, e.g., 1%, 2% or 5%.

For example, the determined voltage can differ from the standard voltage more than a given threshold in one section 11, 12 of the power grid 10. This is determined based on the electric vehicle data 48 and the static points power grid data 50. Then, it is determined that the power grid characteristic/property deviates from a given power grid standard characteristic/property more than a threshold. This information can be saved, a log-file and/or an e-mail alert can be generated.

Thus, one or more sections of the power grid can be determined where the power grid property/properties differ from the standard power grid property/properties more than the threshold.

Electric vehicle data 48 from several electric rail vehicle 14 which are in the same section can be used to determine the properties of a section of the power grid.

A map of the power grid 10 is determined wherein the map comprises at least one property of the power grid 10 and/or of the electric rail vehicle 14. The map can be displayed visually. In particular, the characteristics/properties of different sections 11, 12 of the power grid 10 can be displayed. For example, a graphic display of the power grid 10 or the respective sections 11, 12 of the power grid 10, respectively, can be generated and displayed. The graphic display can show different sections 11, 12 of the power grid 10 in different colours indicating how much the power grid properties/characteristic(s) differ(s) from the standard power grid characteristic/property. The colour "green" could indicate that the difference between the standard property and the measured/determined property is clearly below a given threshold. The colour "orange" could indicate that the difference is close to but smaller than the threshold. The colour "red" could indicate that the difference is larger than/above the threshold.

The determined power grid characteristics/properties and/or the determined map of the power grid 10 can be used for controlling the power and/or power flow in the power grid 10. E.g., if the voltage of the power grid 10 in a section 11, 12 of the power grid 10 is lower than the given standard voltage, this indicates that there is not enough power available in that section 11, 12 of the power grid 10. Thus, additional power can be provided to that section 11, 12 of the power grid 10. Additional power plants or substations can be activated to provide additional power to that section 11, 12 of the power grid 10. This will avoid any undesired power limitations of the electric vehicle due to lacking power of the power grid 10 in that section 11, 12. Also, power from other sections 11, 12 of the grid can be diverted to the section 11, 12 of the power grid 10, where the power grid characteristic/properties differ(s) more than the threshold from the standard power characteristic/property.

The power flow can be controlled in a power flow management center which uses the database 46/the cloud 22. The power flow management center can be part of the monitoring system 20.

The power in the power grid 10 is controlled such that the deviation of the power grid standard characteristics/properties, e.g., voltage and/or frequency etc., is reduced. Thus, if the frequency differs more than the threshold from the standard frequency, additional power is provided to the respective section 11, 12 of the power grid 10 to increase the frequency from the measured/determined value to the standard frequency value. Hence, the power flow and/or power in the power grid 10 is controlled such that the deviation is reduced.

Furthermore, in the long term, areas and/or sections 11, 12 of the power grid 10 can be identified/determined, where the power grid characteristics/properties often (i.e., more than average) differ more than the given threshold from the standard characteristics/properties and/or where the difference(s) between the measured value(s) and the standard value(s) are very large, i.e., are larger than an average difference. In this sections 11, 12 of the power grid 10, additional power plants can be planned/built or other optimizations and/or extensions of the power grid 10 can be carried out. Also, in these determined sections 11, 12 of the power grid 10, fewer trains can be used, i.e., the timetable can be adjusted accordingly such that fewer electric rail vehicles 14 per time and/or less powerful electric rail vehicles 14 use this section 11, 12 of the power grid 10.

Furthermore, in the long term, areas and/or sections 11, 12 of the power grid 10 can be identified, where the power grid characteristics rarely differ more than the given threshold from the standard characteristics/properties and/or where the difference(s) between the measured value(s) and the standard value(s) are very small, i.e., the difference(s) is/are smaller than an average difference. In these sections 11, 12, additional trains can be used, i.e., the timetable(s) can be adjusted accordingly such that more electric rail vehicles 14 per time and/or more powerful electric rail vehicles 14 use this section 11, 12 of the power grid 10.

Also, trends of the power grid characteristics over a period of 24 hours can be analysed. Furthermore, the given threshold can be different for rush-hours, i.e., time periods wherein many electric rail vehicles 14 are in a section 11, 12 of the power grid 10, and non-rush-hours, i.e., time periods wherein fewer electric rail vehicles 14 are in a section 11, 12 of the power grid 10.

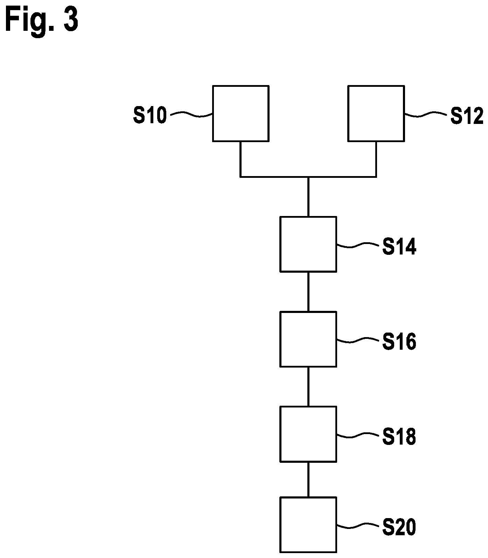

Fig. 3 shows a flow diagram for a method for monitoring a power grid 10 of an electric railway system according to an embodiment of the invention.

In step S10 electric vehicle data 48 is determined/measured/generated, wherein the electric vehicle data 48 comprises the root mean square voltage of the power grid 10 at the location of the electric rail vehicle 14, the frequency of the voltage of the power grid 10 at the location of the electric rail vehicle 14 and the active and/or reactive power of the electric rail vehicle 14 at the location of the electric rail vehicle 14. These values can be determined from measurements in the electric rail vehicle 14. E.g., the total load current of the electric rail vehicle 14, and a property of the power grid 10, e.g., the voltage of the power grid 10 at the location of the electric rail vehicle 14, are measured and the values of the electric vehicle data 48 are calculated/determined based on these measurements. Further values/data which can be part of the electric vehicle data 48 are a power recuperation of the electric rail vehicle 14, an impedance of the power grid 10 and/or a frequency of the power grid 10. The electric vehicle data 48 comprises the determined values together with the time and/or the position of the electric rail vehicle 14 when the measurements which are the basis for the determined value were carried out.

The electric vehicle data 48 is determined within the electric rail vehicle 14. The time and/or position 40 of the electric rail vehicle 14 can be determined via the GPS device 23 of the electric rail vehicle 14.

In step S12 which is an optional step, static points power grid data 50 at static/fixed points 15 of the power grid 10 is determined/measured, wherein the static points power grid data 50 comprises at least one of a frequency of the power grid 10 at the respective static point, an impedance of the power grid 10 at the respective static point and/or the power of the power grid 10 at the respective static point. Furthermore, the static points power grid data 50 can be data about the workload of power stations and/or of transformers.

In step S14, the electric vehicle data 48 and the static points power grid data 50 is sent to the external computing system 45 and/or the cloud 22. The monitoring system 20 acquires/collects the electric vehicle data 48 and/or the static points power grid data 50. The data may be stored in a database 46.

Next, in step S16, the electric vehicle data 48 and the static points power grid data 50 is analyzed in the external computing system 45 for determining sections 11, 12 of the power grid where the power grid characteristics/properties differ from the standard power grid property/value more than a given threshold.

Sections 11, 12 of the power grid 10 where the power grid characteristics/properties deviate from given power grid standard characteristics/properties more than a given threshold are determined.

One or more of the determined properties of the power grid 10 can be compared with one or more standard properties of the power grid 10, e.g., voltage, impedance, power, frequency. If the absolute difference between the property and the standard property is higher than the threshold, this section is determined as a section where the power grid is not in excellent status.

In step S18, which is an optional step, a map of the power grid 10 can be generated. For this, one or more properties of the power grid 10 at different points and/or sections 11, 12 of the power grid 10 are determined/acquired. This can be carried out via calculation in the computing system 45. Also, machine learning can be used for the determining the properties of the sections 11, 12 of the power grid 10 and/or for generating the map of the power grid 10 (also called power grid map). The map can be shown on a display to users/experts which monitor and/or control the power grid 10.

In step S20, the power/power flow of the power grid 10 or of certain sections 11, 12 of the power grid 10 is controlled based on the determined map and/or sections 11, 12 of the power grid 10, where the power grid characteristics/properties differ from the standard power grid characteristics/properties more than the threshold. The power flow of the power in the power grid 10 can be controlled on basis of the determined map and/or determined sections of the power grid and/or on basis of the acquired electric vehicle data 48 and/or the static points power grid data 50. Additional power stations/generating stations can be activated and/or the power of the generating stations can be guided in different sections 11, 12 of the power grid 10. Furthermore, power stations/generating stations can be taken off the power grid 10. Additionally, further electric vehicles can be sent into sections 11, 12 of the power grid 10, where the power grid characteristics/properties are very close to the power grid standard characteristics/properties. Furthermore, trains can be held back from entering certain sections 11, 12 of the power grid 10 where the power grid characteristics/properties differs from the power grid standard characteristics/properties more than a given threshold. In this way, the stability of the power grid 10 can be improved, i.e., that enough power is provided for each of the electric rail vehicles 14. Thus, no power limitations due to the power feed from the power grid 10 is present in the electric rail vehicles 14. Also, the available power in the power grid 10 can be used efficiently. Also, the railways of the electric railway system can be used efficiently.

The power grid 10 can have a plurality of sections 11, 12 which are electrically separated from each other. This means that the power flow in the different sections 11, 12 of the power grid 10 can be controlled independently from each other.

Also, based on the analyzed electric vehicle data 48 and/or static points power grid data 50, extensions of the power grid 10 can be planned and designed accurately.

Furthermore, the monitoring system 20 and/or the monitoring method do not require additional sensors in the power grid 10 and/or in the electric rail vehicle 14 but uses data from already existing sensors in the power grid 10 and/or in the electric rail vehicle 14.

The electric vehicle data 48 can also comprise the power recuperation of the electric rail vehicle 14, i.e., how much power the electric rail vehicle 14 sends back in the power grid 10, for example, due to recuperation while braking the electric rail vehicle 14. In addition, the times and/or the positions 40 of the recuperation can be sent to the cloud 22/the external computing system 45 /the monitoring system 20.

All sources and sinks of power connected to the pantograph/catenary of the electric rail vehicle 14 are measuring their key data instantaneously and transfer the data to the monitoring system 20 which then can base the power management on a comprehensive real-time representation of the electrical network/the power grid 10. This way, an online power flow management of the power grid 10 of an electric railway system is achieved.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: power grid
- 11, 12: sections of the power grid
- 14: electric rail vehicle
- 15: static points of the power grid
- 16: rail
- 20: monitoring system
- 22: cloud
- 23: GPS device
- 24: vehicle control and monitoring system
- 27: remote communication unit
- 28: power line
- 30: pantograph
- 31: traction wheel
- 34: controller
- 40: time and/or position
- 45: external computing system
- 46: database
- 48: electric vehicle data
- 50: static points power grid data

## Claims

1. A method of monitoring a power grid (10) of an electric railway system, wherein the electric railway system comprises a plurality of electric rail vehicles (14), wherein the method comprises the following steps:
collecting electric vehicle data (48) acquired by electric rail vehicles (14), wherein the electric vehicle data (48) is based on measurements in the electric rail vehicle (14) and comprises at least one property of the power grid (10) at the location of the electric rail vehicle (14), in particular a voltage of the power grid (10) and/or a frequency of the power grid (10) and/or an active and/or reactive power of the electric rail vehicle (14);
determining a location of the electric rail vehicles (14) in the power grid (10);
localizing the electric vehicle data (48) such that the electric vehicle data (48) is associated with locations, where the electric vehicle data (48) has been acquired; and
determining at least one section (11, 12) of the power grid (10) where the at least one property of the power grid (10) deviates from a given power grid standard property more than a given threshold.

2. The method according to claim 1, wherein the method further comprises:
generating a power grid map comprising a power flow, a voltage and/or a frequency of the power grid (10) at different locations of the power grid (10) from the localized electric vehicle data (48).

3. The method according to claim 1, wherein
static points power grid data (50) is collected, wherein the static points power grid data (50) comprises a property of the power grid (10) at respective static points (15) in the power grid (10), and
wherein the section (11, 12) of the power grid (10) where the at least one property of the power grid (10) deviates from the given power grid standard property more than the given threshold is determined from the localized electric vehicle data (48) and the static points power grid data (50).

4. The method according to claim 1 or 2, wherein
a power flow in the power grid (10) is controlled based on the determined section of the power grid (10) such that the difference between a power grid standard property and a power grid property in the section is reduced.

5. The method according to one of the preceding claims, wherein
a section (11, 12) of the power grid (10) where additional power needs to be input in the power grid (10) is determined based on the determined section (11, 12) of the power grid (10) where the at least one property of the power grid (10) deviates from a given power grid standard property more than a given threshold.

6. The method according to one of the preceding claims, wherein
the electric vehicle data (48) comprises active power and reactive power of the electric rail vehicle (14).

7. The method according to one of the preceding claims, wherein
timetables of the electric rail vehicles (14) are considered when determining a section (11, 12) of the power grid (10) where the at least one power grid property deviates from a given power grid standard property more than the given threshold.

8. The method according to one of the preceding claims, wherein
the section (11, 12) of the power grid (10) where the at least one property of the power grid (10) deviates from a given power grid standard property more than a given threshold is determined in real time.

9. The method according to one of the preceding claims, wherein
the electric rail vehicle (14) does not recuperate power in the power grid (10) when it is determined that the electric rail vehicle (14) is in a section (11, 12) of the power grid (10) where the at least one power grid property deviates from the given power grid standard property more than the given threshold.

10. The method according to one of the preceding claims, wherein
the electric vehicle data (48) comprises occurrences of power limitation of the electric rail vehicles (14) and/or of limitation of recuperation of power from the electric rail vehicles (14) in the power grid (10).

11. A computer program, which, when executed on at least one processor, is adapted for performing the method of one of the preceding claims.

12. A computer-readable medium, in which a computer program according to claim 11 is stored.

13. A monitoring system (20) for monitoring a power grid (10) of an electric railway system, wherein the monitoring system (20) comprises:
electric vehicle data acquiring devices for acquiring electric vehicle data (48), wherein the electric vehicle data (48) is based on measurements in the electric rail vehicle (14) and comprises at least one property of the power grid (10) at the location of the electric rail vehicle (14), in particular a voltage of the power grid (10) and/or a frequency of the power grid (10) and/or an active and/or reactive power of the electric rail vehicle (14);
a central database (46) for storing electric vehicle data (48) and/or static points power grid data (50) comprising a property of the power grid (10) at respective static points (15) in the power grid (10), and
a determining system for performing the method according to one of the claims 1-10.

14. The monitoring system (20) according to claim 13, further comprising a power flow controller device for controlling a power flow in the power grid (10) based on the determined section of the power grid (10) such that the difference between a power grid standard property and a power grid property in the section is reduced.

15. The monitoring system (20) according to claim 13 or 14, wherein the electric vehicle data (48) comprises active power and reactive power of the electric rail vehicles (14) measured in the electric rail vehicles (14).
